# DEMANDE DE BREVET EUROPEEN

(11) **EP 1 126 067 A1**
(43) Date de publication de la demande: **22.08.2001**
(21) Numéro de dépôt: 01450002.9
(22) Date de dépôt: 07.02.2001
(51) Int. Cl.: D04H 13/00, D04H 1/46, B32B 5/26

(54) **Procédé de fabrication d'un complexe, notamment à partir de fibres naturelles et le complexe obtenu**

(30) Priorité: 07.02.2000 FR 0001490
(71) Demandeur: Textinap, Société Anonyme, 87100 Limoges (FR)
(72) Inventeur: Auque, Christian, 87100 Limoges (FR)
(74) Mandataire: Thébault, Jean-Louis

(57) **Abrégé**

L'objet de l'invention est un procédé de fabrication d'un complexe pour former l'âme d'une pièce en matériau composite, réalisée par moulage notamment sous vide, par injection ou presse, caractérisé en ce qu'il comprend les étapes suivantes :
- réalisation d'au moins une nappe de fibres souples,
- réalisation d'au moins une nappe de fibres de renfort,
- superposition de ces deux nappes, et
- aiguilletage à pénétration limitée pour permettre une interpénétration d'une partie des fibres de chacune des nappes dans l'autre sur une interface de faible épaisseur, en interdisant toute pénétration traversante des fibres d'une nappe à travers l'autre.

L'invention couvre aussi le complexe obtenu.

## Description

La présente invention a pour objet un procédé de fabrication d'un complexe, notamment à partir de fibres naturelles et le complexe obtenu au moyen de ce procédé.

Les matériaux composites sont de plus en plus intégrés dans les produits issus des grandes industries et notamment dans la construction de pièces industrielles pour les véhicules en général, pour les constructions nautiques, les panneaux pour le bâtiment. Une contrainte s'ajoute à la technicité croissante des pièces en elles-mêmes, celle du recyclage. Ainsi après usage, les véhicules doivent présenter des taux importants de recyclage.

Pour la réalisation de pièces en matériau composite, on utilise de façon connue un polymère du type résine pour la matrice et un complexe de fibres noyées dans cette matrice.

On sait que l'incinération est une forme de recyclage, si bien qu'il faut déterminer les types de résines utilisées, car les produits ainsi fabriqués peuvent être considérés comme recyclable à condition que le complexe lui-même soit recyclable au moins en partie.

De plus, ce complexe qui a un rôle très important dans la pièce finie, doit permettre une bonne déformation, c'est-à-dire d'être conformable suivant le profil du moule. Ce complexe peut rester en forme dans le moule en attendant l'apport de résine, soit par pressage, soit par injection, effectué par pénétration de la résine sous l'effet d'une dépression maintenue dans le moule dite de moulage sous vide. Il faut donc un complexe qui permet un bon fluage de la résine à travers les différentes couches.

Ce complexe a aussi comme fonction d'améliorer de le fluage de la résine utilisée et surtout de supprimer tout volume exempt de résine. En effet, le rapport fibres/résines doit aussi être dosé pour donner les caractéristiques mécaniques finales au produit et la résine a un rôle de liant des fibres. C'est cet effet de synergie entre les fibres et la résine qui conduit aux propriétés remarquables des composites. Chacun des éléments ne peut travailler isolément. Aussi les fibres ne doivent pas se trouver libre hors de la matrice de résine et la résine doit être armée par les fibres, avec la répartition homogène de ces fibres dans ladite résine. Bien qu'il soit prévu des introductions multipoints de résine, celle-ci doit fluer à travers les fibres pour une répartition homogène en sorte de conférer à la pièce finie ses qualités optimales. Cette répartition et la bonne pénétration sont difficiles à obtenir et restent un problème à résoudre.

Le complexe confère à l'ensemble de la pièce la plus grande partie de sa résistance et plus généralement, influe sur toutes les caractéristiques mécaniques de la pièce finie.

De plus, l'état de surface de la pièce finie est très important et il doit être parfait ou pour le moins, les fibres ne doivent pas induire de défauts apparents à la surface des pièces.

En outre, pour une bonne conformation, il faut non seulement que le complexe puisse se conformer mais il faut aussi qu'il puisse être déchiré, de préférence manuellement, afin d'éviter les instruments de coupe en autorisant un gain de temps. De même, le dédoublement manuel aisé des couches peut être très utile pour réaliser des raccords sans surépaisseur excessives qui engendrent des défauts de surface.

On note aussi que les matériaux composites ont un avantage reconnu, celui de leur faible poids comparé à la résistance mécanique qu'ils présentent. Néanmoins, la fibre de verre par exemple est un matériau lourd qui grève les composites sur le plan du poids. Aussi, l'utilisation de fibres de verre dont les qualités mécaniques sont effectives et indéniables, en combinaison avec des fibres plus légères d'origine végétale, peut présenter un intérêt certain, notamment pour le recyclage et pour gagner du poids sur le composite final.

En outre, les fibres synthétiques sont issues de produits non renouvelables alors que les fibres naturelles provenant de l'agriculture sont produites en quantités illimitées. Les progrès dans l'étude et le contrôle de la culture et la sélection des plantes permet de disposer d'une qualité de fibres compatible avec les besoins de l'industrie, et ces fibres présentent notamment des caractéristiques certaines de reproductibilité.

On connaît déjà des procédés ou des produits utilisés pour réaliser des armatures de matériau composite à partir de fibres de verre et notamment la demande de brevet européen EP-A-395 548. Cette demande décrit une armature textile utilisable pour la réalisation de matériaux composites qui est constituée par au moins deux couches de renforts textiles disposées de part et d'autre d'une couche centrale, les couches de l'ensemble étant liées par couture.

Pour présenter une épaisseur adaptée au moulage à la presse en injection sous vide, il est prévu de faire subir aux fibres de la couche centrale un traitement qui leur donne une ondulation permanente et donc un effet de volume.

On a noté que les fils de couture apparaissent à la surface des pièces finies notamment lorsque ceux-ci sont en fibres artificielles qui absorbent plus de résine et qui conduisent à des retraits variables, donc à des défauts.

La demande de brevet français FR-A-2 734 847 décrit une armature textile qui comprend une première nappe de fibres réalisée par cardage et sur laquelle on projette, en continu, en sortie de cardage, des fibres ou filaments de verre, l'ensemble étant alors aiguilleté pour entraîner les fibres ou filaments au travers de toute l'épaisseur de la nappe de fibres, pour que ces fibres ressortent sur la face opposée.

Une telle réalisation présente un intérêt certain du point de vue de la résistance mécanique puisqu'elle associe la fibre de verre mais elle présente un inconvénient majeur lorsqu'elle est utilisée comme âme dans le cadre de la réalisation d'une pièce en composite avec de la résine, c'est la formation de ponts. En effet, le fait de disposer de fibres orientées perpendiculairement aux faces extérieures de la pièce à réaliser et débouchantes, provoque des ponts avec des retraits variables au cours de la polymérisation de la résine, ce qui conduit à un état de surface non satisfaisant pour de nombreuses pièces, car on comprend qu'il soit de plus en plus recherché des pièces ayant le meilleur état de surface possible quel que soit le procédé utilisé à savoir le moulage sous vide, injection sous vide, pressage, centrifugation ou pultrusion.

On connaît aussi par la demande de brevet WO 93/01342 un dispositif particulièrement adapté pour réaliser des nappes composites ayant une épaisseur parfaitement contrôlée et permettant d'intégrer un matériau différent entre deux couches de fibres.

Ainsi, deux nappes élémentaires sont déroulées de part et d'autre d'un noyau avec passage de ces nappes entre les planches à aiguilles d'une aiguilleteuse. Les deux nappes sont donc aiguilletées avec un espace déterminé maintenu entre les deux nappes élémentaires par le noyau, tout en créant des lignes de liaison perpendiculaires au plan des nappes.

Entre ces deux nappes et à travers les ponts réalisés par aiguilletage, il est possible d'introduire en continu, à travers le noyau, un constituant dont la nature peut être très variable, fluide, thermoformable ou solide.

Il s'agit de produits très particuliers notamment pour permettre l'intégration de câbles ou des conduits fluides lors de la réalisation de panneaux.

La présente invention consiste à réaliser un complexe fibreux adapté pour constituer une âme de pièce composite obtenue par mise en forme dans le moule par toute technique adaptée et plus particulièrement par ce procédé d'injection, de vide ou de presse. Ce complexe assure un très bon fluage de la résine et supprime la formation de ponts susceptibles de créer des défauts de surface. Ce complexe présente aussi un taux de recyclage intéressant par le fait qu'il peut utiliser pour partie des fibres naturelles. De plus, et ceci est particulièrement intéressant pour le moulage, la combinaison avec aiguilletage de fibres naturelles avec des fibres de verres ou toute autre fibre à forte rigidité mais non traversantes, rend le complexe obtenu particulièrement déformable. D'ailleurs pour certains grammages, il est possible de le déchirer à la main sans recourir à des outils de coupe. De même, il est possible de dédoubler le complexe sur les bords déchirés ou découpés pour assurer des jonctions en évitant les surépaisseurs.

La présente invention est maintenant décrite en détail en regard des dessins annexés qui montrent de façon schématique :
- figure 1, une vue des étapes de fabrication du complexe selon la présente invention, et
- figure 2, une vue en coupe d'une pièce composite réalisée à partir du complexe selon la présente invention.

Le procédé selon la présente invention consiste à réaliser une nappe 10 de fibres, par exemple des fibres naturelles de lin. Cette nappe est réalisée de façon connue par cardage puis pré-aiguilletage des fibres.

Le pré-aiguilletage consiste à aiguilleter la nappe de façon légère. Ainsi, par exemple une nappe de 250 à 600 g/m² est aiguilletée avec une densité d'aiguilles relativement faible et avec une fréquence comprise entre 30 et 50 coups/cm².

La nappe 10 ainsi obtenue est alors manipulable.

Par ailleurs, on dispose d'une nappe ou d'un tissu 12 de fibres de verre ou de toute autre nature mais d'une grande résistance, ces fibres étant destinées à conférer une forte résistance mécanique au complexe final.

On peut citer pour faire suite à l'exemple donné ci-avant une nappe avec un poids de fibres de verre de l'ordre de 450 g/m², avec des diamètres de fibres compris entre 9 et 24 µm, et une longueur de fibres comprise entre 50 et 150 mm.

On superpose alors ces deux nappes qui sont déplacées à travers une aiguilleteuse 14 qui assure un aiguilletage à pénétration limitée. A cet effet, les aiguilles traversent la nappe de lin et le profil de ces aiguilles permet de faire pénétrer des fibres de lin en l'occurrence, dans la nappe de fibres de verre à l'aller et de tirer des fibres de verre de la nappe vers la nappe de lin pré-aiguilletée au retour.

On note que les réglages de la machine à aiguilleter ne permettent pas de faire traverser les fibres tirées ou poussées d'une nappe à travers l'autre nappe.

On obtient ainsi une interface e de liaison de faible épaisseur de l'ordre de 20% de l'épaisseur totale du complexe pour fixer les idées. Cette interface comprend des pontages entre la nappe de fibres de verre et chacune des nappes de lin pré-aiguilletées.

Si l'on vient à exercer une traction suffisante entre les deux nappes, on constate que des fibres de lin subsistent dans la nappe de fibres de verre et que des fibres de verre subsistent dans la nappe de lin pré-aiguilleté. Par contre, les faces extérieures du complexe restent totalement inchangées et les fibres de lin ne débouchent pas sur la face libre de la nappe de fibres de verre et les fibres de verre ne débouchent pas sur la face du pré-aiguilleté de lin.

On remarque que l'aiguilletage des deux nappes provoque également un complément d'aiguilletage de chacune des nappes elle-même, ce qui conduit à un complexe particulièrement manipulable.

Lors du moulage d'une pièce, par exemple sous vide, on constate que la résine pénètre particulièrement bien dans chacune des nappes du complexe car le fluage n'est pas perturbé par des liaisons traversantes importantes.

De plus, on constate que les ponts perpendiculaires aux faces étant supprimés, les défauts de surface sont également supprimés.

On obtient d'ailleurs un état de surface encore amélioré dans le cas d'une utilisation du complexe selon la présente invention en disposant sur la face libre de la nappe de fibres de verre, par aiguilletage, un voile 16 de fibres artificielles très fin par exemple un voile de polyester de 40 à 150 g/m².

En effet, le voile vient au contact du moule et, en s'imprégnant de résine, permet d'obtenir, après polymérisation, un état de surface particulièrement bon. Ce voile permet aussi de protéger les fibres de verre du composite en améliorant l'état de surface.

On comprend aussi que la souplesse de ce complexe permet une excellente déformabilité puisque les liaisons transversales sont supprimées au profit d'une simple interface de liaison sur une épaisseur faible en regard de l'épaisseur de chacune des nappes et/ou de l'épaisseur du complexe.

Chacune des nappes conserve quasiment sa souplesse initiale et le complexe final n'est raidi que par l'augmentation de l'épaisseur totale sans augmentation du module d'inertie par un effet de poutre dû aux pontages.

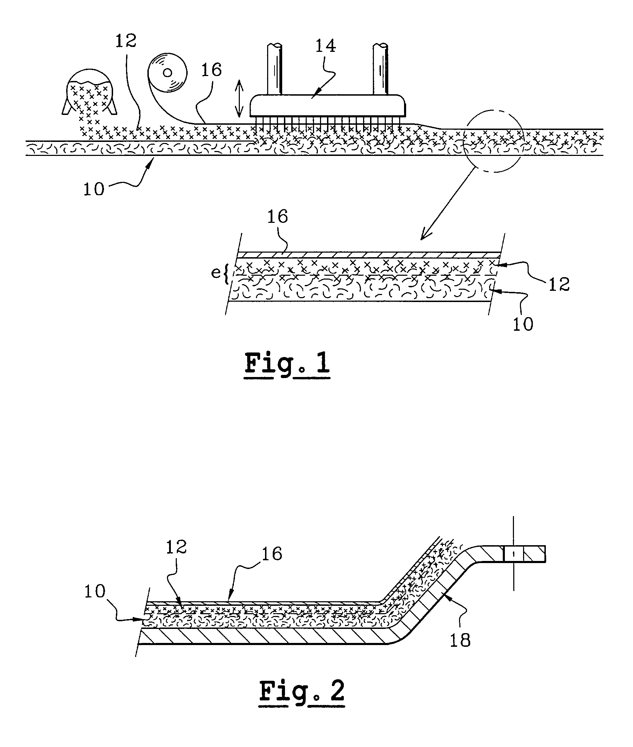

Aussi, dans une pièce présentant des angles relativement prononcés comme dans celle qui est représentée sur la figure 2, issu d'un moule 18 schématiquement représenté, on constate que le complexe est présent dans l'angle, à sa place, sur toute l'épaisseur de la future pièce composite, après introduction et fluage de la résine.

En variante, on peut disposer un plateau de chaque côté du complexe à aiguilleter pour réaliser un aiguilletage double avec pénétration dessus/dessous et pénétration limitée des fibres mutuellement sur une interface de faible épaisseur.

Le procédé qui vient d'être décrit l'a été à partir d'un complexe à deux nappes, mais on peut envisager un complexe à trois nappes dans lequel la nappe de fibres rigides est interposée entre deux nappes de fibres naturelles telles que du lin.

Dans ce cas, une fois réalisé le complexe deux couches, on dépose une nappe de fibres naturelles sur la face libre de la nappe de fibres rigides et on assure un nouvel aiguilletage à pénétration limitée pour créer des liaisons uniquement à l'interface de la nappe de fibres de verre et la nouvelle nappe de fibres naturelles.

Cette fabrication avec reprise peut être conduite en continu avec les trois couches simultanément, ceci dépendant des moyens de fabrication de l'entité industrielle.

On peut utiliser d'autres fibres naturelles d'origine végétale comme le coton, le chanvre ou des fibres artificielles, fibres de carbone ou aramides sans changer le procédé qui vient d'être décrit.

Les résines sont choisies en fonction des pièces à réaliser parmi l'ensemble des familles des thermoplastiques et des thermodurcissables avec des gel-coats de finition lorsque cela est nécessaire.

## Revendications

1. Procédé de fabrication d'un complexe pour former l'âme d'une pièce en matériau composite, réalisée par moulage notamment sous vide, par injection ou presse, caractérisé en ce qu'il comprend les étapes suivantes :
- réalisation d'au moins une nappe de fibres souples,
- réalisation d'au moins une nappe de fibres de renfort,
- superposition de ces deux nappes, et
- aiguilletage à pénétration limitée pour permettre une interpénétration d'une partie des fibres de chacune des nappes dans l'autre sur une interface de faible épaisseur, en interdisant toute pénétration traversante des fibres d'une nappe à travers l'autre.

2. Procédé selon la revendication 1, caractérisé en ce que la nappe de fibres souples est une nappe de fibres naturelles ou artificielles, obtenue par cardage et pré-aiguilletage.

3. Procédé selon la revendication 2, caractérisé en ce que la nappe de fibres souples est réalisée avec des fibres naturelles de lin.

4. Procédé selon l'une quelconque des revendications précédentes, caractérisé en ce que les fibres de renfort sont des fibres de verre.

5. Procédé selon la revendication 4, caractérisé en ce que les fibres de verre ont les caractéristiques suivantes :
- diamètre compris entre 9 et 24 µm, et
- longueur comprise entre 50 et 150 mm.

6. Procédé selon l'une quelconque des revendications précédentes, caractérisé en ce que l'on ajoute sur la face libre de la nappe de fibres souples, une nappe de fibres de renfort et on fait subir à la nouvelle interface ainsi créée un aiguilletage à pénétration limitée, identique à celui subi par la première interface pour obtenir un complexe à trois couches.

7. Procédé selon l'une quelconque des revendications précédentes, caractérisé en ce que l'on dispose sur la face libre du complexe ainsi réalisé un voile de fibres en sorte de conférer à la pièce finie un bon état de surface.

8. Procédé selon la revendication 7, caractérisé en ce que le voile de fibres est un voile de fibres synthétiques de densité comprise entre 40 et 150 g/m².

9. Procédé selon la revendication 8, caractérisé en ce que les fibres synthétiques sont des fibres de polyester.

10. Complexe obtenu par la mise en oeuvre de l'une quelconque des revendications précédentes de procédé.
